# EUROPEAN PATENT SPECIFICATION

(11) **EP 3 456 122 B1**
(45) Date of publication and mention of the grant of the patent: **09.10.2024**
(21) Application number: 17723361.6
(22) Date of filing: 11.05.2017
(51) Int. Cl.: H04W 72/0446, H04W 72/23

(54) **GRANTING RESOURCES TO A WIRELESS DEVICE**
GEWÄHRUNG VON RESSOURCEN AN EINE DRAHTLOSE VORRICHTUNG
OCTROI DE RESSOURCES À UN DISPOSITIF SANS FIL

(30) Priority: 13.05.2016 US 201662335933 P
(43) Date of publication of application: 20.03.2019
(73) Proprietor: Telefonaktiebolaget LM Ericsson (publ), 164 83 Stockholm (SE)
(72) Inventor: ANDGART, Niklas, 24733 Södra Sandby (SE); WIKSTRÖM, Gustav, 18730 Täby (SE); SAHLIN, Henrik, 43541 Mölnlycke (SE); FALCONETTI, Laetitia, 17761 Järfälla (SE)
(74) Representative: Ericsson
(86) International application number: PCT/EP2017/061396
(87) International publication number: WO 2017/194706

(56) References cited:
- EP-A2- 2 733 875
- US-A1- 2015 257 139
- US-A1- 2016 088 604
- US-A1- 2016 128 028
- ERICSSON: "Short TTI operation with Carrier Aggregation", vol. RAN WG1, no. Busan; 20160411 - 20160415, 1 April 2016 (2016-04-01), XP051079814, Retrieved from the Internet <URL:http://www.3gpp.org/ftp/tsg_ran/WG1_RL1/TSGR1_84b/Docs/> [retrieved on 20160401]
- ZTE: "Downlink control channels for shortened TTI", vol. RAN WG1, no. Busan, Korea; 20160411 - 20160415, 2 April 2016 (2016-04-02), XP051080178, Retrieved from the Internet <URL:http://www.3gpp.org/ftp/tsg_ran/WG1_RL1/TSGR1_84b/Docs/> [retrieved on 20160402]

## Description

### TECHNICAL FIELD

Embodiments presented herein relate to a method and a network node for granting resources to a wireless device. Embodiments presented herein further relate to a method and a wireless device for receiving granting of resources from a network node.

### BACKGROUND

In communications networks, there may be a challenge to obtain good performance and capacity for a given communications protocol, its parameters and the physical environment in which the communications network is deployed.

For example, one parameter in providing good performance and capacity for a given communications protocol in a communications network is packet data latency. Latency measurements can be performed in all stages of the communications network, for example when verifying a new software release or system component, and/or when deploying the communications network and when the communications network is in commercial operation.

Shorter latency than previous generations of 3GPP radio access technologies was one performance metric that guided the design of Long Term Evolution (LTE). LTE is also now recognized by the end-users to be a system that provides faster access to internet and lower packet latencies than previous generations of mobile radio technologies.

Packet latency is also a parameter that indirectly influences the throughput of the communications network. Traffic using the Hypertext Transfer Protocol (HTTP) and/or the Transmission Control Protocol (TCP) is currently one of the dominating application and transport layer protocol suite used on the Internet. The typical size of HTTP based transactions over the Internet is in the range of a few 10's of Kilo byte up to 1 Mega byte. In this size range, the TCP slow start period is a significant part of the total transport period of the packet stream. During TCP slow start the performance is packet latency limited. Hence, improved packet latency can potentially improve the average throughput, at least for this type of TCP based data transactions.

Radio resource efficiency could also be positively impacted by packet latency reductions. Lower packet data latency could increase the number of transmissions possible within a certain delay bound; hence higher Block Error Rate (BLER) targets could be used for the data transmissions freeing up radio resources potentially improving the capacity of the system.

The existing physical layer downlink control channels, Physical Downlink Control Channel (PDCCH) and enhanced PDCCH (ePDCCH), are used to carry Downlink Control Information (DCI) such as scheduling decisions for uplink (UL; from device to network) and downlink (DL; from network to device) and power control commands. Both PDCCH and ePDCCH are according to present communications networks transmitted once per 1ms subframe.

US 2016/128028 describes employing two-stage control channel messaging. Systems, methods, and apparatuses for two stage physical downlink control channel (PDCCH) with a downlink control information (DCI) flag and DCI format size indicator are described. For instance, the present disclosure presents an example method of wireless communication at a wireless device, which may include receiving, at a first bandwidth and during a transmission time interval (TTI), a first control channel message. In addition, the example method may include determining, based on a flag in the first control channel message, whether a second control channel message is present in the TTI.

US 2016/088604 describes a data structure for managing user equipment communications in a wireless communication system is presented. In some examples, the data structure may include one or more resource element blocks into which a frequency bandwidth of a downlink channel is divided within a symbol that defines a transmission time interval in a downlink subframe. Furthermore, the data structure may include a control region and a data region within at least one resource element block of the one or more resource element blocks.

3GPP TS 36.212 lists examples of different (DCI) formats for UL and DL resource assignments. UL scheduling grants use either DCI format o or DCI format 4. The latter was added in the 3rd Generation Partnership Project (3GPP) Release 10 (Rel-10) for supporting uplink spatial multiplexing

Other prior art examples are US 2015/0257139 A1 and EP 2 733 875 A2.

The existing way of operation, e.g. frame structure and control signalling, are designed for data allocations in subframes of a fixed length of 1 ms, which may vary only in allocated bandwidth. Specifically, the current DCIs define resource allocations within the entire subframe, and are only transmitted once per subframe. The existing way of operation does not indicate how scheduling of UL and DL data can be performed in short subframes, i.e., subframes shorter than 1 ms.
Hence, there is a need for efficient communications using short subframes.

### SUMMARY

An object of embodiments herein is to provide mechanisms for communications using short subframe.

According to claim 1 there is presented a method for granting resources to a wireless device operating with a short Transmission Time Interval (sTTI). The method is performed by a network node. The method comprises transmitting, to the wireless device, a first control information message for a downlink channel. The method comprises transmitting, to the wireless device, a second control information message, wherein the second control information message is decodable based on a parameter of the first control information message, or based on signalled information.

According to independent claim 3 there is presented a network node for granting resources to a wireless device operating with an sTTI. The network node comprises processing circuitry. The processing circuitry is configured to cause the network node to transmit, to the wireless device, a first control information message for a downlink channel. The processing circuitry is configured to cause the network node to transmit, to the wireless device, a second control information message, wherein the second control information message is decodable based on a parameter of the first control information message, or based on signalled information.

According to independent claim 12 there is presented a method for receiving granting of resources from a network node. The method is performed by a wireless device operating with an sTTI. The method comprises receiving a first control information message for a downlink channel from the network node. The method comprises decoding a second control information message received from the network node based on a parameter of the first control information message, or based on signalled information.

According to independent claim 13 there is presented a wireless device for receiving granting of resources from a network node. The wireless device is configured for operating with an sTTI and comprises processing circuitry. The processing circuitry is configured to cause the wireless device to receive a first control information message for a downlink channel from the network node. The processing circuitry is configured to cause the wireless device to decode a second control information message received from the network node based on a parameter of the first control information message, or based on signalled information.

Advantageously these methods, the network node and the wireless device provide efficient communications using short subframes.

Advantageously this reduces the total number of blind decodes the wireless device needs to perform when in short TTI operation, and thereby limits the processing load in the wireless device.

It is to be noted that any feature of the first, second, third, fourth, fifth, sixth seventh, eight, ninth, tenth and eleventh aspects may be applied to any other aspect, wherever appropriate. Likewise, any advantage of the first aspect may equally apply to the second, third, fourth, fifth, sixth, seventh, eight, ninth, tenth, and/or eleventh aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a communication network according to embodiments;
Figs. 2, 3, 4, and 5 are flowcharts of methods according to embodiments; and
Figs. 6, 7, and 8 are schematic illustrations of search spaces for DCI messages in short TTIs according to embodiments;
Fig. 9 is a schematic diagram showing functional units of a network node according to an embodiment;
Fig. 10 is a schematic diagram showing functional modules of a network node according to an embodiment;
Fig. 11 is a schematic diagram showing functional units of a wireless device according to an embodiment;
Fig. 12 is a schematic diagram showing functional modules of a wireless device according to an embodiment; and
Fig. 13 shows one example of a computer program product comprising computer readable means according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

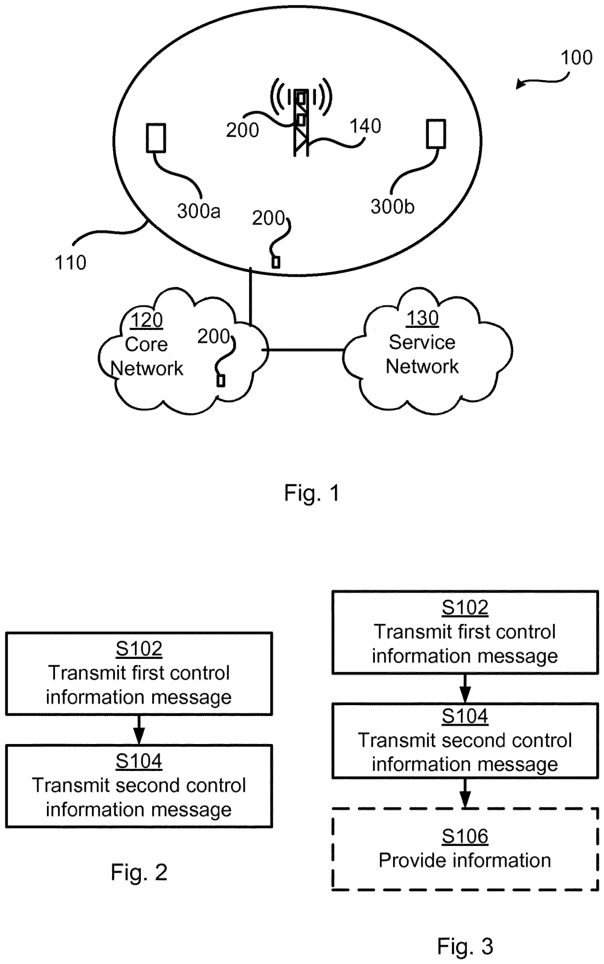

Fig. 1 is a schematic diagram illustrating a communications network 100 where embodiments presented herein can be applied. The communications network 100 comprises at least one network node 200. The functionality of the network node 200 and how it interacts with other entities, nodes, and devices in the communications network 100 will be further disclosed below.

The communications network 100 further comprises at least one radio access network node 140. The at least one radio access network node 140 is part of a radio access network 110 and operatively connected to a core network 120 which in turn is operatively connected to a service network 130. The at least one radio access network node 140 provides network access in the radio access network 110. A wireless device 300a, 300b served by the at least one radio access network node 140 is thereby enabled to access services and exchange data with the core network 120 and the service network 130.

Examples of wireless devices 300a, 300b include, but are not limited to, mobile stations, mobile phones, handsets, wireless local loop phones, user equipment (UE), smartphones, laptop computers, tablet computers, network equipped sensors, wireless modems, and Internet of Things devices. Examples of radio access network nodes 120 include, but are not limited to, radio base stations, base transceiver stations, NodeBs, evolved NodeBs, access points, and access nodes. As the skilled person understands, the communications network 100 may comprise a plurality of radio access network nodes 120, each providing network access to a plurality of wireless devices 300a, 300b. The herein disclosed embodiments are not limited to any particular number of network nodes 200, radio access network nodes 120 or wireless devices 300a, 300b.

The wireless device 300a, 300b accesses services and exchanges data with the core network 120 and the service network 130 by transmitting data in packets to the core network 120 and the service network 130 and by receiving data in packets from the core network 120 and the service network 130 via the radio access network node 140.

Packet latency has above been identified as degrading network performance. One area to address when it comes to packet latency reductions is the reduction of transport time of data and control signalling, by addressing the length of a transmission time interval (TTI). In LTE release 8, a TTI corresponds to one subframe (SF) of length 1 millisecond. One such 1 ms TTI is constructed by using 14 OFDM or SC-FDMA symbols in the case of normal cyclic prefix and 12 OFDM or SC-FDMA symbols in the case of extended cyclic prefix.

According to embodiment disclosed herein the TTIs are shortened by introducing shortened subframes (below denoted short subframes). With a short TTI (below denoted sTTI), the subframes can be decided to have any duration in time and comprise resources on a number of OFDM or SC-FDMA symbols within a 1 ms subframe. As one example, the duration of a short subframe may be 0.5 ms, i.e., seven OFDM symbols or SC-FDMA symbols for the case with normal cyclic prefix.

As mentioned, one way to reduce latency is to reduce the transmission time interval (TTI), and instead of assigning resources with a time duration of 1 ms, there is then a need to assign resources with shorter duration such as a number of OFDM symbols or SC-FDMA symbols. This implies a need for device specific control signalling that enables indication of such short scheduling assignments.

Using scheduling with 1 ms TTIs, the wireless devices 300a, 300b are allocated frequency resources based on, e.g., bitmaps in DCI fields identifying used resource blocks. As the TTI length is shortened, this may lead to an increased signaling overhead if the allocation is specified several times per subframe. Having a grant only to a single wireless device 300a, 300b per such short TTI will limit the overhead. It might be further beneficial to share the frequency resources within a short TTI between several wireless device 300a, 300b, while limiting the amount of control overhead.

In order for short TTIs to coexist with legacy LTE transmission, a short TTI frequency band can be defined on a subset of the available resource blocks. Within this short TTI frequency band, which can be either contiguous or spread out in frequency, transmission is performed using the shorter TTIs. Outside this short TTI frequency band, legacy LTE wireless devices can be scheduled with a 1 ms TTI length.

Since scheduling and control information is transmitted more often when using short TTIs, it can be beneficial to limit the amount of information transmitted on the fast time scale to keep the overhead at a reasonable level. Therefore, part of the control information may be transmitted on a slower timescale, and can also be directed to a group of wireless devices 300a, 300b using short TTI operation. Thus two new DCIs may be defined for short TTI transmission; a slow DCI that is valid for one full subframe (or more), and a device-specific fast DCI. In some aspects the slow DCI is sent less frequently than the fast DCI.

A wireless device 300a, 300b can be configured for short TTI operation by being assigned a group short TTI Radio Network Temporary Identifier (RNTI). The wireless device 300a, 300b could then searches the common search space (CSS) of the PDCCH for slow grants (comprising a slow Downlink Control Information (DCI) message) scrambled with the short TTI RNTI. This slow grant comprises the frequency allocation for a downlink (DL) and an uplink (UL) short TTI frequency band to be used for short TTI operation. After decoding such a slow grant the wireless device 300a, 300b is in short TTI operation and can extend its search space to an in-band control channel, also defined by the slow grant.

Within the short TTI band, an in-band control channel, in terms of a short PDCCH, is defined. This short PDCCH is used for fast grants (also referred to as fast DCI). To minimize the latency, the short PDCCH can be transmitted in every TTI, and typically on the first symbol of the TTI. The resources not occupied by control signaling can be assigned to short PDSCH data, to efficiently use frequency resources. As herein defined, the term short PDSCH and short PUSCH are used to denote the downlink and uplink physical shared channels with TTIs less than one sub-frame, respectively. Similarly, the term short PDCCH is used to denote downlink physical control channels with TTIs less than one sub-frame.

A DCI message is encoded onto a number of Control Channel Elements (CCEs) in the PDCCH region of the DL subframe. The wireless device 300a, 300b searches both in a CSS and a device-specific search space (hereinafter denoted USS; where U is short for UE as in User Equipment) in the PDCCH for different CCE aggregation levels (AL). The number PDCCH candidates of different sizes in LTE are given in Table 9.1.1-1 in 3GPP TS 36.213 v13.1.1. According to this table there are 22 PDCCH candidates to be monitored by the wireless device 300a, 300b, and with 2 different DCI sizes defined for each transmission mode, there are a total of 44 possibilities that the wireless device 300a, 300b has to try with blind decoding.

In legacy LTE the wireless device 300a, 300b monitors a predefined USS for the PDCCH. With the introduction of a new in-band control channel (below denoted short PDCCH) the number of blind decoding attempts will increase for a wireless device 300a, 300b in short TTI operation.

It can then be desired to keep the number of blind decoding attempts in the short PDCCH to a low level. According to embodiments disclosed herein a reduced set of aggregation levels and/or starting positions are therefore used for the DCI messages in the short PDCCH.

The embodiments disclosed herein thus relate to mechanisms for granting resources to a wireless device 300a operating with an sTTI. In order to obtain such mechanisms there is provided a network node 200, a method performed by the network node 200, a computer program product comprising code, for example in the form of a computer program, that when run on processing circuitry of the network node 200, causes the network node 200 to perform the method.

The embodiments disclosed herein further relate to mechanisms for receiving granting of resources from a network node 200. In order to obtain such mechanisms there is further provided a wireless device 300a, 300b operating with an sTTI, a method performed by the wireless device 300a, 300b, and a computer program product comprising code, for example in the form of a computer program, that when run on processing circuitry of the wireless device 300a, 300b, causes the wireless device 300a, 300b to perform the method.

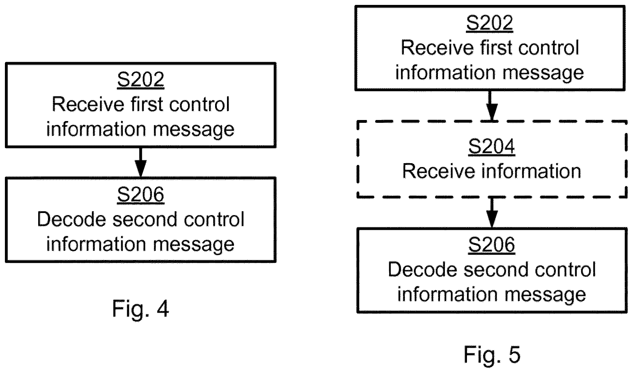

Figs. 2 and 3 are flow charts illustrating embodiments of methods for granting resources to a wireless device 300a operating with an sTTI as performed by the network node 200. Figs. 4 and 5 are flow charts illustrating embodiments of methods for receiving granting of resources from a network node 200 as performed by the wireless device 300a, 300b operating with an sTTI. The methods are advantageously provided as computer programs 1320a, 1320b (see below).

Reference is now made to Fig. 2 illustrating a method for granting resources to a wireless device 300a operating with an sTTI as performed by the network node 200 according to an embodiment.

S102: The network node 200 transmits to the wireless device 300a, a first control information message for a downlink channel.

S104: The network node 200 transmits, to the wireless device 300a, a second control information message. The second control information message is, by the wireless device 300a, 300b, decodable based on a parameter of the first control information message. The parameter indicates resources for operation with the sTTI.

The first control information message transmitted in step S102 can be regarded as a slow grant in a PDCCH. Such a slow grant could define a TTI frequency band for short TTI operation in the PDCCH. The slow grant can be transmitted on a rate equal to or slower than once each sub-frame.

The second control information message transmitted in step S104 can be regarded as a fast grant. Such a fast grant can be user specific and be transmitted on a faster rate than once each sub-frame, for example once per TTI. At least two such grants can be provided in one (single) Orthogonal Frequency Division Multiplexing (OFDM) symbol in the short TTI frequency band and hence be transmitted to at least two wireless devices 300a, 300b.

The term sTTI, or short TTI, is a TTI of a short subframe. The short subframe can have a shorter duration in time than 1 ms. The short TTI can be defined as being shorter than the interval between two consecutive PDCCH transmissions (as being transmitted once every 1 ms). To achieve latency reduction the networks node 200 can thus be configured to schedule data on short timeframes, such as at short TTI level.

Embodiments relating to further details of granting resources to a wireless device 300a will now be disclosed.

Reference is now made to Fig. 3 illustrating methods for granting resources to a wireless device 300a operating with an sTTI as performed by the network node 200 according to further embodiments. It is assumed that steps S102, S104 are performed as disclosed with reference to Fig. 2 and a repeated description of these steps is therefore omitted.

According to some aspects the network node 200 signals to the wireless device 300a what resources to skip to find its own short PDSCH allocation. According to an embodiment the resources are CCE resources. The network node 200 could then be configured to provide the wireless device 300a with information regarding what CCEs within the TTI frequency band the wireless device can skip and hence be configured to perform step S106:

S106: The network node 200 provides information regarding what CCEs the wireless device 300a is to skip when attempting to decode the second control information message. This enables the wireless device 300a to skip some of the CCE that are configured for sTTI control signaling. The information could specify what CCEs within the TTI frequency band the wireless device 300a is to skip when attempting to decode the second control information message within the TTI frequency band.

Step S106 can be performed after step S104.

Reference is now made to Fig. 4 illustrating a method for receiving granting of resources from a network node 200 as performed by the wireless device 300a, 300b operating with an sTTI according to an embodiment.

As disclosed above, the network node 200 in step S102 transmits, to the wireless device 300a, a first control information message. It is assumed that the wireless device 300a receives this first control information message. Hence, the wireless device 300a, 300b is configured to perform step S202:
S202: The wireless device 300a, 300b receives a first control information message for a downlink channel from the network node 200.

As disclosed above, the network node 200 in step S104 transmits, to the wireless device 300a, a second control information message. It is assumed that the wireless device 300a receives this second control information message. Hence, the wireless device 300a, 300b is configured to perform step S206:
S206: The wireless device 300a, 300b decodes the second control information message received from the network node 200 based on a parameter of the first control information message. As disclosed above, the parameter indicates resources for operation with the sTTI.

Reference is now made to Fig. 5 illustrating methods for receiving granting of resources from a network node 200 as performed by the wireless device 300a, 300b operating with an sTTI according to further embodiments. It is assumed that steps S202, S206 are performed as disclosed with reference to Fig. 4 and a repeated description of these steps is therefore omitted.

As disclosed above, according to an embodiment the network node 200 in step S106 provides information to the wireless device 300a. Hence, according to an embodiment the wireless device 300a, 300b is configured to perform step S204:
S204: The wireless device 300a, 300b receives information regarding what CCE resources to skip when attempting to decode the second control information message. This enables the wireless device 300a, 300b to skip some of the CCEs that are configured for sTTI control signaling. The information could specify what CCEs within the TTI frequency band the wireless device 300a, 300b is to skip when attempting to decode the second control information message within the TTI frequency band.

Embodiments relating to further details of granting resources to a wireless device 300a as performed by the network node 200 and receiving granting of resources from a network node 200 as performed by the wireless device 300a, 300b will now be disclosed.

Embodiments applicable to both the methods performed by the network node 200 and the wireless device 300a, 300b will now be disclosed.

As disclosed above, the resources could be CCE resources.

According to an embodiment the first control information message is a slow grant in a PDCCH. The slow grant could define a TTI frequency band for operation with the sTTI. Further, the TTI frequency band could comprise the second control information message. The second control information message is then decodable by the wireless device 300a, 300b using less than all available candidate CCE resources within the TTI frequency band.

Further, the network node 200 could signal to the wireless device 300a the set of frequency resource blocks where to find the second control information message. Further, the network node 200 could signal to the wireless device 300a the set of frequency resource blocks and the number of time domain OFDM symbols where to find the second control information message. That is, according to an embodiment the parameter of the first control information message, or the signalled information, is a set of frequency resources or a set of time-frequency resources.

Further, the number of control channel candidates can be reduced and signalled in the first control information message. That is, according to an embodiment the parameter of the first control information message, or the signalled information, is a number of control channel candidates for at least one aggregation level.

Since the TTI frequency band is for short TTI operation the second control information message can be regarded as a fast Downlink Control Information (DCI) message being provided in a short PDCCH. The number of blind decoding attempts (in the short PDCCH) can be limited by the wireless device 300a, 300b using only a limited number of combinations of aggregation levels and/or starting positions of the DCI message.

To send DL and UL grants, the network node 200 transmits DCI messages with different aggregation levels. For example, one DCI message can be encoded over 1, 2, 4, or 8 CCEs, where each CCE may span 36 resource elements. Depending on the supported number of simultaneously scheduled wireless devices 300a, 300b, a different number of DCI messages need to be transmitted, and the number of blind decoding attempts will increase when there are many simultaneously served wireless devices 300a, 300b.

According to one scenario, only one wireless device 300a, 300b is scheduled per TTI in the UL and only one wireless device 300a, 300b is scheduled per TTI in the DL. This then limits the number of DCI messages to two per TTI. According to other scenarios there are more than one UL and/or DL grant.

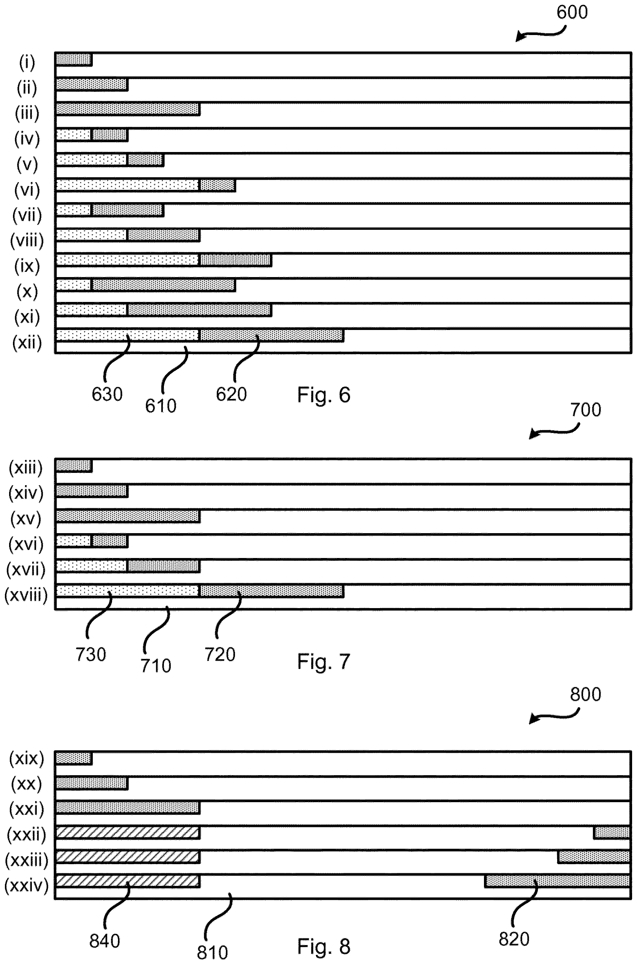

Figs. 6, 7, and 8 are schematic illustrations of search spaces 600, 700, 800 for DCI messages in short TTIs (i)-(xxiv) according to embodiments. In Figs. 6, 7, and 8 regions shaded as regions 620, 720, 820 show possible positions for different aggregation levels of CCEs for each short TTI (i)-(xxiv). The regions shaded as regions 630, 730, 830 symbolize grants and/or DCI messages to one or more other wireless device 300b. The regions shaded as regions 610, 710, 810 symbolize data.

In order to limit the amount of transmitted control information, the DCI messages can be placed consecutively, with the DL grant last, as shown in Fig. 6. Fig. 6 schematically illustrates all combinations of search spaces for two grants. The regions shaded as region 620 show possible locations for aggregation levels of 1 to 4 CCEs. The wireless device receiving the DL grant can be configured to know that all resources after the grant belongs to it, since any possible UL grants (to that or to any other wireless device 300a, 300b) has been sent earlier.

In Fig. 6, the search space when having a maximum two DCI messages is shown. There are thus 12 different placements (the regions shaded as region 620) of the DCI message for the wireless device 300a, 300b to search for when attempting to decode the DCI message.

In order to limit the number of blind decoding attempts, the combination of aggregation levels can be restricted. Fig. 7 schematically illustrates an example with search spaces only corresponding to two identical aggregation levels. Thus, Fig. 7 represents an embodiment where the aggregation levels are restricted to be the same for both DCI messages 720, 730. In some examples, the messages are for different wireless devices. Thus, there are not so many positions to search for the fast DL and UL grants; 6 positions compared to the previous 12.

In another embodiment, the maximum aggregation level for the fast grants is less than or equal to the aggregation level of the received slow grant.

In yet another embodiment, the aggregation level is fixed for all fast DCI messages, where the fixed aggregation level is derived from the aggregation level of the slow DCI. One example is that the aggregation level of the fast DCI is always the same as the aggregation level used for the slow DCI. If the amount of payload (i.e. the number of control information bits) is significantly different between the slow DCI and the fast DCI, then a fixed larger, or lower, aggregation level is used for fast DCI as compared to the aggregation level for the slow DCI.

In another embodiment, a reduced set of aggregation levels used for fast DCI in a given subframe is signalled at the beginning of this subframe. Information indicating the set can be sent in a message common to all wireless devices 300a, 300b or be specific to a given wireless device 300a, 300b. For instance, instead of aggregation levels 1, 2 and 4, the network node 200 can send information to restrict the possible aggregation levels to search for (e.g. to AL1 and AL2) in a given subframe. When having signalled this to the wireless devices 300a, 300b and received by the wireless device, the required number of tested combinations is reduced for the wireless devices 300a, 300b.

Fig. 6 and Fig. 7 illustrate scenarios where a first and a second fast DCI are transmitted in a short TTI. There could be also a higher number of fast DCIs sent in a short TTI using a similar arrangement as shown in Fig. 6 or Fig. 7. In such scenarios, to detect (and decode) its fast DCI, a wireless device 300a, 300b needs to test all combinations of all possible aggregation levels for an increasing number of fast DCIs. For instance, the wireless device 300a, 300b can be configured to first assume to have the fast DCI in the first position and test all combinations of aggregation levels for the first fast DCI. If no combination leads to a correctly decoded fast DCI, the wireless device 300a, 300b can be configured to then assume to have the fast DCI in the second position and test all combinations of aggregation levels for the two first fast DCI. The wireless device 300a, 300b can be configured to continue to increase the number of tested fast DCI positions until one combination leads to a correctly decoded fast DCI. This procedure can represent a large amount of blind decoding attempts. In one embodiment, the network node 200 therefore signals to the wireless device 300a, 300b the position of the fast DCI intended to this wireless device 300a, 300b. This information is sent in a device-specific message and helps reducing the number of blind decoding attempts as the wireless device 300a, 300b can directly test all combinations of aggregation levels for the correct number of fast DCIs.

The recent-most embodiment limits the number of blind decoding attempts, but restricts the aggregation level to be the same on both the UL and DL grants. This may be acceptable, for example, if both grants are targeting the same wireless device 300a, 300b, and the amount of payload is somewhat similar in the UL and DL grants. This information that can be taken into account by the scheduler in the network node 200 when co-scheduling wireless devices 300a, 300b that require the same or similar aggregation levels.

If it is desired to schedule two or more wireless devices 300a, 300b, one requiring aggregation level 1 (AL 1) and another one requiring aggregation level 4 (AL 4), both these wireless devices 300a, 300b may need to be scheduled with AL 4, which will increase the overhead. An alternative approach is therefore to fix the position of the DL grants, as shown in Fig. 8. Fig. 8 schematically illustrates search spaces at fixed locations, without limitation of aggregation levels. The aggregation level of the UL grant is specified in a bit field in the fast DL grant. Regions shaded as region 840 in Fig. 8 represent otherwise unknown extension of UL grant). Only 6 blind decoding attempts are necessary, but there is no restriction on the used aggregation level. In order for the wireless device 300a, 300b receiving the DL grant to know where to find the short PDSCH resources, the wireless device 300a, 300b needs to know the aggregation level of the UL grant. This can then be signalled, for example, according to Table 1. In some examples, the signalled information is within the DL fast DCI. For the case when multiple UL grants are allowed, Table 1 specifies the total number of CCEs the DL wireless device 300a, 300b is supposed to skip in order to find the short PDSCH resources (as a sum of the zero, one, or more UL grants).

**Table 1. Indication of aggregation level of UL grant**

| Bit field | Meaning |
|---|---|
| 00 | No UL grant |
| 01 | UL grant with AL 1 |
| 10 | UL grant with AL 2 |
| 11 | UL grant with AL 4 |

A summary of the above disclosed embodiments will now be presented. These embodiment apply equally well to the network node 200 as the wireless device 300a, 300b.

According to some of the above disclosed embodiments the second control information message is a fast DCI message.

According to some of the above disclosed embodiments there are limited combinations of aggregation levels for the fast DCI message. That is, according to an embodiment the available CCE resources are defined by aggregation levels of CCEs.

According to some of the above disclosed embodiments there are limited combinations of starting positions for the fast DCI message. That is, according to an embodiment the available CCE resources are defined by starting positions of CCEs within the TTI frequency band.

According to some of the above disclosed embodiments a candidate CCE resource is defined by a combination of aggregation level and starting position. That is, according to an embodiment each of the available candidate CCE resources is defined by a unique combination of an aggregation level of CCEs and starting position of CCEs within the TTI frequency band.

According to some of the above disclosed embodiments all fast DCI messages are of the same aggregation level. That is, according to an embodiment the second control information message has a fixed aggregation level of CCEs.

According to some of the above disclosed embodiments all aggregation levels of the fast DCI are less or equal to the aggregation level of received slow DCI (slow grant). That is, according to an embodiment the DCI message has an aggregation level of CCEs not larger than the aggregation level (of CCEs) of the first control information. The wireless device 300a, 300b could determine the AL of the fast grant based on the AL of the slow grant, the AL of the fast grant being e.g. equal or less than the AL of the slow grant.

According to some of the above disclosed embodiments all aggregation levels of the fast DCI are equal to the aggregation level of the received slow DCI (slow grant). That is, according to an embodiment the second control information message has an aggregation level of CCEs equal to the aggregation level (of CCEs) of the first control information.

According to some of the above disclosed embodiments the DCI message is a fast grant. That is, according to an embodiment the second control information message is a fast grant.

According to some of the above disclosed embodiments there is at maximum one DL fast grant. That is, according to an embodiment the second control information message comprises at most one downlink grant.

According to some of the above disclosed embodiments there is at maximum one UL fast grant and one DL fast grant. That is, according to an embodiment the second control information message comprises at most one uplink grant and one downlink grant.

According to some of the above disclosed embodiments the starting positions of the candidates are fixed. That is, according to an embodiment the second control information message has a fixed or predetermined set of available starting positions within the TTI frequency band. In this respect the starting positions of the candidates could be hardcoded, or otherwise stored in or obtained by, the wireless device 300a, 300b or provided to the wireless device 300a, 300b from the network node 200.

In some examples a slow grant may be considered as a control message comprising information of a frequency band for short TTI operation of the wireless device. In some examples, the slow grant may be considered as a control message in a CSS, and/or the fast grant may be considered as control message in a USS. In some examples, a slow grant may be considered as control message transmitted once per subframe, and/or a fast grant may be considered as a control message type which is transmitted (or uses a time resources which allows transmission) a plurality of times per subframe (e.g. once per wireless device 300a, 300b in sTTI operation served by a cell).

The wireless device 300a, 300b determines information about a second control information message, in order to allow improved decoding (i.e. searching through candidates) of the second control information message. For example, the wireless device determines a parameter of the first control information message. In some examples, the determining is obtained from a decoding of the first control information message. In some aspects, the wireless device 300a, 300b decodes the first control information message, stores a value of the parameter used for successful decoding(e.g. the AL), and retrieves the value from the storage, and uses the value to decode the second control information message (e.g. decoding only for the stored AL). The determined information reduces the number of blind decodes needed. Thus, less than all possible candidate CCEs need to be considered.

In some examples, the wireless device 300a, 300b determines the information from an earlier control information message, i.e. first control information message. In some examples, the information is signalled to the wireless device 300a, 300b, e.g. from the network node 200. In further examples, the information is fixed or predetermined, and for example, may be obtained by the wireless device 300a, 300b from a storage medium. In some aspects, processing circuitry 310 of the wireless device 300a, 300b obtains the information from a storage medium 330 (see description of Fig. below) of the wireless device 300a, 300b.

In some examples, the first and second control information message may be of the same type, e.g. both being slow DCIs or both being fast DCIs. In some examples, the first and second control information messages are of different type; slow one being a DCI and the other being a fast DCI. In some examples, one or both control information messages are messages each containing only part of the control information for a wireless device 300a, 300b in a subframe.

In some examples, the first control information message is a higher layer configuration message, such as a radio resource control (RRC) message.

The information may indicate one or more of an aggregation level, a starting position of the second control information message, or a set of one or more aggregation level or a starting position.

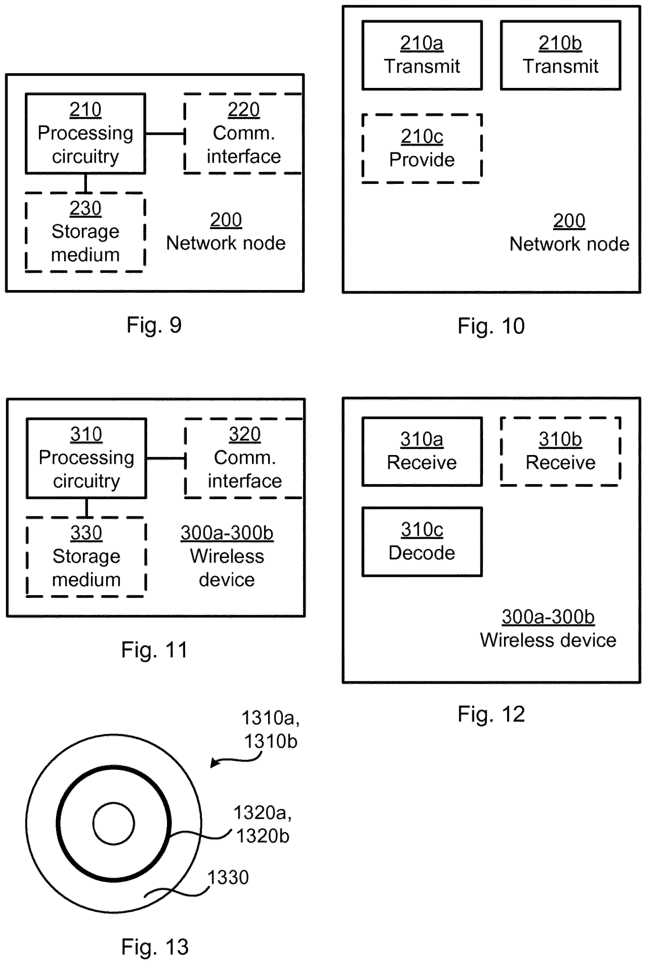

Fig. 9 schematically illustrates, in terms of a number of functional units, the components of a network node 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 1310a (as in Fig. 13), e.g. in the form of a storage medium 230. The processing circuitry 210 may further be provided as at least one application specific integrated circuit (ASIC), or field programmable gate array (FPGA).

Particularly, the processing circuitry 210 is configured to cause the network node 200 to perform a set of operations, or steps, S102-S106, as disclosed above. For example, the storage medium 230 may store the set of operations, and the processing circuitry 210 may be configured to retrieve the set of operations from the storage medium 230 to cause the network node 200 to perform the set of operations. The set of operations may be provided as a set of executable instructions. Thus the processing circuitry 210 is thereby arranged to execute methods as herein disclosed.

The storage medium 230 may also comprise persistent storage, which, for example, can be any single one or combination of magnetic memory, optical memory, solid state memory or even remotely mounted memory.

The network node 200 may further comprise a communications interface 220 for communications at least with a wireless device 300a, 300b. As such the communications interface 220 may comprise one or more transmitters and receivers, comprising analogue and digital components and a suitable number of antennas for wireless communications and ports for wireline communications.

The processing circuitry 210 controls the general operation of the network node 200 e.g. by sending data and control signals to the communications interface 220 and the storage medium 230, by receiving data and reports from the communications interface 220, and by retrieving data and instructions from the storage medium 230. Other components, as well as the related functionality, of the network node 200 are omitted in order not to obscure the concepts presented herein.

Fig. 10 schematically illustrates, in terms of a number of functional modules, the components of a network node 200 according to an embodiment. The network node 200 of Fig. 10 comprises a number of functional modules; an transmit module 210a configured to perform step S102, and a transmit module 210b configured to perform step S104. The network node 200 of Fig. 10 may further comprise a number of optional functional modules, such as a provide module 210c configured to perform step S106. In general terms, each functional module 210a-210c may be implemented in hardware or in software. Preferably, one or more or all functional modules 210a-210c may be implemented by the processing circuitry 210, possibly in cooperation with functional units 220 and/or 230. The processing circuitry 210 may thus be arranged to from the storage medium 230 fetch instructions as provided by a functional module 210a-210c and to execute these instructions, thereby performing any steps of the network node 200 as disclosed herein.

The network node 200 may be provided as a standalone device or as a part of at least one further device. For example, the network node 200 may be provided in a node of the radio access network 110 or in a node of the core network 120. For example, the network node 200, or at least its functionality, could be implemented in a radio base station, a base transceiver station, a NodeBs, an evolved NodeBs, an access points, or an access node. Alternatively, functionality of the network node 200 may be distributed between at least two devices, or nodes. These at least two nodes, or devices, may either be part of the same network part (such as the radio access network 110 or the core network 120) or may be spread between at least two such network devices, parts, or nodes. In general terms, instructions that are required to be performed in real time may be performed in one or more device, or node, in the radio access network 110.

Thus, a first portion of the instructions performed by the network node 200 may be executed in a first device, and a second portion of the of the instructions performed by the network node 200 may be executed in a second device; the herein disclosed embodiments are not limited to any particular number of devices on which the instructions performed by the network node 200 may be executed. Hence, the methods according to the herein disclosed embodiments are suitable to be performed by a network node 200 residing in a cloud computational environment. Therefore, although a single processing circuitry 210 is illustrated in Fig. 9 the processing circuitry 210 may be distributed among a plurality of devices, or nodes. The same applies to the functional modules 210a-210c of Fig. 10 and the computer program 1320a of Fig. 13 (see below).

Fig. schematically illustrates, in terms of a number of functional units, the components of a wireless device 300a, 300b according to an embodiment. Processing circuitry 310 is provided using any combination of one or more of a suitable central processing unit (CPU), multiprocessor, microcontroller, digital signal processor (DSP), etc., capable of executing software instructions stored in a computer program product 1310b (as in Fig. 13), e.g. in the form of a storage medium 330. The processing circuitry 310 may further be provided as at least one application specific integrated circuit (ASIC), or field programmable gate array (FPGA).

Particularly, the processing circuitry 310 is configured to cause the wireless device 300a, 300b to perform a set of operations, or steps, S202-S208, as disclosed above. For example, the storage medium 330 may store the set of operations, and the processing circuitry 310 may be configured to retrieve the set of operations from the storage medium 330 to cause the wireless device 300a, 300b to perform the set of operations. The set of operations may be provided as a set of executable instructions. Thus the processing circuitry 310 is thereby arranged to execute methods as herein disclosed.

The storage medium 330 may also comprise persistent storage, which, for example, can be any single one or combination of magnetic memory, optical memory, solid state memory or even remotely mounted memory.

The wireless device 300a, 300b may further comprise a communications interface 320 for communications at least with a network node 200. As such the communications interface 320 may comprise one or more transmitters and receivers, comprising analogue and digital components and a suitable number of antennas for wireless communications and ports for wireline communications.

The processing circuitry 310 controls the general operation of the wireless device 300a, 300b e.g. by sending data and control signals to the communications interface 320 and the storage medium 330, by receiving data and reports from the communications interface 320, and by retrieving data and instructions from the storage medium 330. Other components, as well as the related functionality, of the wireless device 300a, 300b are omitted in order not to obscure the concepts presented herein.

Fig. 12 schematically illustrates, in terms of a number of functional modules, the components of a wireless device 300a, 300b according to an embodiment. The wireless device 300a, 300b of Fig. 12 comprises a number of functional modules; a receive module 310a configured to perform step S102, and a decode module 310c configured to perform step S206. The wireless device 300a, 300b of Fig. 12 may further comprises a number of optional functional modules, such a receive module 310b configured to perform step S204. In general terms, each functional module 310a-310c may be implemented in hardware or in software. Preferably, one or more or all functional modules 310a-310c may be implemented by the processing circuitry 310, possibly in cooperation with functional units 320 and/or 330.

The processing circuitry 310 may thus be arranged to from the storage medium 330 fetch instructions as provided by a functional module 310a-310c and to execute these instructions, thereby performing any steps of the wireless device 300a, 300b as disclosed herein.

Fig. 13 shows one example of a computer program product 1310a, 1310b comprising computer readable means 1330. On this computer readable means 1330, a computer program 1320a can be stored, which computer program 1320a can cause the processing circuitry 210 and thereto operatively coupled entities and devices, such as the communications interface 220 and the storage medium 230, to execute methods according to embodiments described herein. The computer program 1320a and/or computer program product 1310a may thus provide means for performing any steps of the network node 200 as herein disclosed. On this computer readable means 1330, a computer program 1320b can be stored, which computer program 1320b can cause the processing circuitry 310 and thereto operatively coupled entities and devices, such as the communications interface 320 and the storage medium 330, to execute methods according to embodiments described herein. The computer program 1320b and/or computer program product 1310b may thus provide means for performing any steps of the wireless device 300a, 300b as herein disclosed.

In the example of Fig. 13, the computer program product 1310a, 1310b is illustrated as an optical disc, such as a CD (compact disc) or a DVD (digital versatile disc) or a Blu-Ray disc. The computer program product 1310a, 1310b could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1320a, 1320b is here schematically shown as a track on the depicted optical disk, the computer program 1320a, 1320b can be stored in any way which is suitable for the computer program product 1310a, 1310b.

An LTE subframe lasting 1 ms contains 14 OFDM symbols for normal CP. A New Radio (5G), NR, subframe may have a fixed duration of 1 ms and may therefore contain a different number of OFDM symbols for different subcarrier spacings. An LTE slot corresponds to 7 OFDM symbols for normal CP. An NR slot corresponds to 7 or 14 OFDM symbols; at 15 kHz subcarrier spacing, a slot with 7 OFDM symbols occupies 0.5 ms. Concerning NR terminology, reference is made to 3GPP TR 38.802 v14.0.0 and later versions.

Aspects of the disclosure may be applicable to either LTE or NR radio communications. References to a short TTI may alternatively be considered as a mini-slot, according to NR terminology. The mini-slot may have a length of 1 symbol, 2 symbols, 3 or more symbols, or a length of between 1 symbol and a NR slot length minus 1 symbol. The short TTI may have a length of 1 symbol, 2 symbols, 3 or more symbols, an LTE slot length (7 symbols) or a length of between 1 symbol and a LTE subframe length minus 1 symbol. The short TTI, or mini-slot may be considered as having a length less than 1ms or less than 0.5ms.

The inventive concept has mainly been described above with reference to a few embodiments. However, as is readily appreciated by a person skilled in the art, other embodiments than the ones disclosed above are equally possible within the scope of the inventive concept, as defined by the appended claims.

## Claims

1. A method for granting resources on a data channel to a wireless device (300a) operating with a short Transmission Time Interval, sTTI, the method being performed by a network node (200), the method comprising:
transmitting (S102), to the wireless device (300a), a first control information message for the data channel; and
transmitting (S104), to the wireless device (300a), a second control information message for the data channel,
wherein the second control information message is decodable based on signalled information in the first control information message;
wherein the second control information message has an aggregation level, AL, of Control Channel Elements, CCEs;
wherein the signalled information in the first control information message comprises an indication of a set of frequency resources for the second control information message; and
wherein the signalled information in the first control information message comprises an indication of an aggregation level of the second control information message.

2. The method according to claim 1 wherein a parameter of the first control information message indicates resources for operation with the sTTI; and/or,
wherein the resources are Control Channel Element resources, the method further comprising:
providing (S106) information regarding what CCEs the wireless device is to skip when attempting to decode the second control information message.

3. A method for receiving granting of resources on a data channel, the method being performed by a wireless device (300a) operating with a short Transmission Time Interval, sTTI, the method comprising:
receiving (S202) a first control information message for the data channel; and
decoding (S206) a second control information message based on signalled information in the first control information message;
wherein the second control information message has an aggregation level, AL, of Control Channel Elements, CCEs;
wherein the signalled information in the first control information message comprises an indication of a set of frequency resources for the second control information message; and
wherein the signalled information in the first control information message comprises an indication of an aggregation level of the second control information message.

4. The method according to claim 3, wherein a parameter of the first control information message indicates resources for operation with the sTTI, or, wherein the resources are Control Channel Element, CCE, resources, the method further comprising:
receiving (S204) information regarding what CCE resources to skip when attempting to decode the second control information message.

5. The method according to any of the preceding claims, wherein the resources are Control Channel Element, CCE, resources; and/or,
a set of time-frequency resources; and/or,
wherein the wireless device decodes the second control information message using less than all available candidate Control Channel Element, CCE, resources.

6. The method according to any of the preceding claims, wherein the parameter of the first control information message, or the signalled information, is a number of control channel candidates for at least one aggregation level, AL; and/or,
wherein the each of the available candidate CCE resources is defined by a unique combination of an aggregation level, AL, of CCEs and starting position of CCEs within the TTI frequency band.

7. The method according to any of the preceding claims, wherein the wireless device (300a, 300b) decodes the second control information message using only an aggregation level, AL, of Control Channel Elements, CCEs, equal to or smaller than the AL of the first control information message; and/or, wherein the wireless device (300a, 300b) decodes the second control information message using only an aggregation level, AL, of Control Channel Elements, CCEs, equal to the AL of the first control information message.

8. The method according to any of the preceding claims, wherein the second control information message is a fast grant or wherein the second control information message is specific to the wireless device (300a, 300b).

9. The method according to any of the preceding claims, wherein the first control information message comprises an uplink grant and the second control information message comprises a downlink grant (or assignment), or, the first control information message comprises a downlink grant (or assignment) and the second control information message comprises an uplink grant, and/or, wherein the first control information message comprises a frequency band for operation with the sTTI, and/or the second control information message comprises control information, that is specific for the wireless device (300a, 300b).

10. The method according to any of the preceding claims, wherein the first control information message is valid for one or more subframes, and the second control information message is valid for one or more subframes, or, the first control information message is valid for one or more subframes, and/or a said second control information message is in every sTTI; and/or, wherein the first control information message is a higher layer configuration message, such as a radio resource control, RRC, message.

11. The method according to any of the preceding claims, wherein the second control information message comprises at most one downlink grant;
and/or, wherein the second control information message comprises at most one uplink grant and one downlink grant.

12. A network node (200) for granting resources on a channel to a wireless device (300a) operating with a short Transmission Time Interval, sTTI, the network node (200) comprising processing circuitry (210), the processing circuitry being configured to cause the network node (200) to:
transmit, to the wireless device (300a), a first control information message for the channel; and
transmit, to the wireless device (300a), a second control information message for the channel, wherein the second control information message is decodable based on
based on signalled information in the first control information message;
wherein the second control information message has an aggregation level, AL, of Control Channel Elements, CCEs;
wherein the signalled information in the first control information message comprises an indication of a set of frequency resources for the second control information message; and
wherein the signalled information in the first control information message comprises an indication of an aggregation level of the second control information message.

13. A wireless device (300a, 300b) for receiving granting of resources on a data channel, the wireless device (300a, 300b) being configured for operating with a short Transmission Time Interval, sTTI, and comprising processing circuitry (310), the processing circuitry being configured to cause the wireless device (300a, 300b) to:
receive a first control information message for the data channel; and
decode a second control information message for the data channel based on signalled information in the first control information message;
wherein the second control information message has an aggregation level, AL, of Control Channel Elements, CCEs;
wherein the signalled information in the first control information message comprises an indication of a set of frequency resources for the second control information message; and
wherein the signalled information in the first control information message comprises an indication of an aggregation level of the second control information message.

14. The wireless device (300a, 300b) according to claim 13, wherein a parameter of the first control information message indicates resources for operation with the sTTI.

15. The wireless device (300a, 300b) according to claim 13 or 14, further being configured to perform a method according to any of claims 4 to 11.

## Patentansprüche

1. Verfahren zur Freigabe von Ressourcen auf einem Datenkanal für eine drahtlose Vorrichtung (300a), die mit einem kurzen Sendezeitintervall, sTTI, arbeitet, wobei das Verfahren von einem Netzwerkknoten (200) durchgeführt wird, wobei das Verfahren umfasst:
Senden (S102) einer ersten Steuerinformationsnachricht für den Datenkanal an die drahtlose Vorrichtung (300a); und
Senden (S104) einer zweiten Steuerinformationsnachricht für den Datenkanal an die drahtlose Vorrichtung (300a),
wobei die zweite Steuerinformationsnachricht basierend auf signalisierten Informationen in der ersten Steuerinformationsnachricht decodiert werden kann;
wobei die zweite Steuerinformationsnachricht eine Aggregationsstufe, AL, von Steuerkanalelementen, CCEs, aufweist;
wobei die signalisierten Informationen in der ersten Steuerinformationsnachricht eine Angabe eines Satzes von Frequenzressourcen für die zweite Steuerinformationsnachricht umfassen; und
wobei die signalisierten Informationen in der ersten Steuerinformationsnachricht eine Angabe einer Aggregationsstufe der zweiten Steuerinformationsnachricht umfassen.

2. Verfahren nach Anspruch 1, wobei ein Parameter der ersten Steuerinformationsnachricht Ressourcen für Betrieb mit dem sTTI angibt; und/oder
wobei die Ressourcen Steuerkanalelement-Ressourcen sind, wobei das Verfahren ferner umfasst:
Bereitstellen (S106) von Informationen hinsichtlich dessen, welche CCEs die drahtlose Vorrichtung bei dem Versuch, die zweite Steuerinformationsnachricht zu decodieren, überspringen soll.

3. Verfahren zum Empfangen einer Freigabe von Ressourcen auf einem Datenkanal, wobei das Verfahren von einer drahtlosen Vorrichtung (300a) durchgeführt wird, die mit einem kurzen Sendezeitintervall, sTTI, arbeitet, wobei das Verfahren umfasst:
Empfangen (S202) einer ersten Steuerinformationsnachricht für den Datenkanal; und
Decodieren (S206) einer zweiten Steuerinformationsnachricht basierend auf signalisierten Informationen in der ersten Steuerinformationsnachricht;
wobei die zweite Steuerinformationsnachricht eine Aggregationsstufe, AL, von Steuerkanalelementen, CCEs, aufweist;
wobei die signalisierten Informationen in der ersten Steuerinformationsnachricht eine Angabe eines Satzes von Frequenzressourcen für die zweite Steuerinformationsnachricht umfassen; und
wobei die signalisierten Informationen in der ersten Steuerinformationsnachricht eine Angabe einer Aggregationsstufe der zweiten Steuerinformationsnachricht umfassen.

4. Verfahren nach Anspruch 3, wobei ein Parameter der ersten Steuerinformationsnachricht Ressourcen für Betrieb mit dem sTTI angibt oder wobei die Ressourcen Steuerkanalelement-Ressourcen, CCE-Ressourcen, sind, wobei das Verfahren ferner umfasst:
Empfangen (S204) von Informationen hinsichtlich dessen, welche CCEs bei dem Versuch, die zweite Steuerinformationsnachricht zu decodieren, übersprungen werden sollen.

5. Verfahren nach einem der vorhergehenden Ansprüche, wobei es sich bei den Ressourcen um Steuerkanalelement-Ressourcen, CCE-Ressourcen, und/oder
einen Satz von Zeit-Frequenz-Ressourcen handelt; und/oder
wobei die drahtlose Vorrichtung die zweite Steuerinformationsnachricht unter Verwendung von weniger als allen verfügbaren Kandidaten-Steuerkanalelement-Ressourcen, CCE-Ressourcen, decodiert.

6. Verfahren nach einem der vorhergehenden Ansprüche, wobei es sich bei dem Parameter der ersten Steuerinformationsnachricht oder den signalisierten Informationen um eine Anzahl von Steuerkanalkandidaten für mindestens eine Aggregationsstufe, AL, handelt; und/oder
wobei jede der verfügbaren Kandidaten-CCE-Ressourcen durch eine eindeutige Kombination aus einer Aggregationsstufe, AL, von CCEs und einer Anfangsposition von CCEs innerhalb des TTI-Frequenzbandes definiert ist.

7. Verfahren nach einem der vorhergehenden Ansprüche, wobei die drahtlose Vorrichtung (300a, 300b) die zweite Steuerinformationsnachricht unter Verwendung nur einer Aggregationsstufe, AL, von Steuerkanalelementen, CCEs, decodiert, die gleich oder kleiner als die AL der ersten Steuerinformationsnachricht ist; und/oder wobei die drahtlose Vorrichtung (300a, 300b) die zweite Steuerinformationsnachricht unter Verwendung nur einer Aggregationsstufe, AL, von Steuerkanalelementen, CEEs, decodiert, die gleich der AL der ersten Steuerinformationsnachricht ist.

8. Verfahren nach einem der vorhergehenden Ansprüche, wobei die zweite Steuerinformationsnachricht eine schnelle Freigabe ist oder wobei die zweite Steuerinformationsnachricht spezifisch für die drahtlose Vorrichtung (300a, 300b) ist.

9. Verfahren nach einem der vorhergehenden Ansprüche, wobei die erste Steuerinformationsnachricht eine Uplink-Freigabe umfasst und die zweite Steuerinformationsnachricht eine Downlink-Freigabe (oder -Zuordnung) umfasst oder die erste Steuerinformationsnachricht eine Downlink-Freigabe (oder -Zuordnung) umfasst und die zweite Steuerinformationsnachricht eine Uplink-Freigabe umfasst und/oder wobei die erste Steuerinformationsnachricht ein Frequenzband für Betrieb mit dem sTTI umfasst und/oder die zweite Steuerinformationsnachricht Steuerinformationen umfasst, die spezifisch für die drahtlose Vorrichtung (300a, 300b) sind.

10. Verfahren nach einem der vorhergehenden Ansprüche, wobei die erste Steuerinformationsnachricht für einen oder mehrere Unterrahmen gilt und die zweite Steuerinformationsnachricht für einen oder mehrere Unterrahmen gilt oder die erste Steuerinformationsnachricht für einen oder mehrere Unterrahmen gilt und/oder die zweite Steuerinformationsnachricht in jedem sTTI ist und/oder wobei die erste Steuerinformationsnachricht eine Konfigurationsnachricht der höheren Schichten, beispielsweise eine Funkressourcensteuerungsnachricht, RRC-Nachricht, ist.

11. Verfahren nach einem der vorhergehenden Ansprüche, wobei die zweite Steuerinformationsnachricht höchstens eine Downlink-Freigabe umfasst und/oder wobei die zweite Steuerinformationsnachricht höchstens eine Uplink-Freigabe und eine Downlink-Freigabe umfasst

12. Netzwerkknoten (200) zum Freigeben von Ressourcen auf einem Kanal für eine drahtlose Vorrichtung (300a), die mit einem kurzen Sendezeitintervall, sTTI, arbeitet, wobei der Netzwerkknoten (200) Verarbeitungsschaltungsanordnung (210) umfasst, wobei die Verarbeitungsschaltungsanordnung so konfiguriert ist, dass sie den Netzwerkknoten (200) veranlasst zum:
Senden einer ersten Steuerinformationsnachricht für den Kanal an die drahtlose Vorrichtung (300a); und
Senden einer zweiten Steuerinformationsnachricht für den Kanal an die drahtlose Vorrichtung (300a), wobei die zweite Steuerinformationsnachricht basierend auf signalisierten Informationen in der ersten Steuerinformationsnachricht decodiert werden kann;
wobei die zweite Steuerinformationsnachricht eine Aggregationsstufe, AL, von Steuerkanalelementen, CCEs, aufweist;
wobei die signalisierten Informationen in der ersten Steuerinformationsnachricht eine Angabe eines Satzes von Frequenzressourcen für die zweite Steuerinformationsnachricht umfassen; und
wobei die signalisierten Informationen in der ersten Steuerinformationsnachricht eine Angabe einer Aggregationsstufe der zweiten Steuerinformationsnachricht umfassen.

13. Drahtlose Vorrichtung (300a, 300b) zum Empfangen einer Freigabe von Ressourcen auf einem Datenkanal, wobei die drahtlose Vorrichtung (300a, 300b) so konfiguriert ist, dass sie mit einem kurzen Sendezeitintervall, sTTI, arbeitet und Verarbeitungsschaltungsanordnung (310) umfasst, wobei die Verarbeitungsschaltungsanordnung so konfiguriert ist, dass sie die drahtlose Vorrichtung (300a, 300b) veranlasst zum:
Empfangen einer ersten Steuerinformationsnachricht für den Datenkanal; und
Decodieren einer zweiten Steuerinformationsnachricht für den Datenkanal basierend auf signalisierten Informationen in der ersten Steuerinformationsnachricht;
wobei die zweite Steuerinformationsnachricht eine Aggregationsstufe, AL, von Steuerkanalelementen, CCEs,
aufweist;
wobei die signalisierten Informationen in der ersten Steuerinformationsnachricht eine Angabe eines Satzes von Frequenzressourcen für die zweite Steuerinformationsnachricht umfassen; und
wobei die signalisierten Informationen in der ersten Steuerinformationsnachricht eine Angabe einer Aggregationsstufe der zweiten Steuerinformationsnachricht umfassen.

14. Drahtlose Vorrichtung (300a, 300b) nach Anspruch 13, wobei ein Parameter der ersten Steuerinformationsnachricht Ressourcen für Betrieb mit dem sTTI angibt.

15. Drahtlose Vorrichtung (300a, 300b) nach Anspruch 13 oder 14, die ferner zum Durchführen eines Verfahrens nach einem der Ansprüche 4 bis 11 konfiguriert ist.

## Revendications

1. Procédé d'octroi de ressources sur un canal de données à un dispositif sans fil (300a) fonctionnant avec un intervalle de temps de transmission court, sTTI, le procédé étant réalisé par un noeud de réseau (200), le procédé comprenant :
la transmission (S102), au dispositif sans fil (300a), d'un premier message d'informations de commande pour le canal de données ; et
la transmission (S104), au dispositif sans fil (300a), d'un deuxième message d'informations de commande pour le canal de données,
dans lequel le deuxième message d'informations de commande peut être décodé sur la base d'informations signalées dans le premier message d'informations de commande ;
dans lequel le deuxième message d'informations de commande présente un niveau d'agrégation, AL, d'éléments de canal de commande, CCE ;
dans lequel les informations signalées dans le premier message d'informations de commande comprennent une indication d'un ensemble de ressources de fréquence pour le deuxième message d'informations de commande ; et
dans lequel les informations signalées dans le premier message d'informations de commande comprennent une indication d'un niveau d'agrégation du deuxième message d'informations de commande.

2. Procédé selon la revendication 1, dans lequel un paramètre du premier message d'informations de commande indique des ressources pour un fonctionnement avec le sTTI ; et/ou
dans lequel les ressources sont des ressources d'éléments de canal de commande, le procédé comprenant en outre :
la fourniture (S106) d'informations indiquant quels CCE le dispositif sans fil doit sauter lors d'une tentative de décodage du deuxième message d'informations de commande.

3. Procédé de réception d'octroi de ressources sur un canal de données, le procédé étant réalisé par un dispositif sans fil (300a) fonctionnant avec un intervalle de temps de transmission court, sTTI, le procédé comprenant :
la réception (S202) d'un premier message d'informations de commande pour le canal de données ; et
le décodage (S206) d'un deuxième message d'informations de commande sur la base d'informations signalées dans le premier message d'informations de commande ;
dans lequel le deuxième message d'informations de commande présente un niveau d'agrégation, AL, d'éléments de canal de commande, CCE ;
dans lequel les informations signalées dans le premier message d'informations de commande comprennent une indication d'un ensemble de ressources de fréquence pour le deuxième message d'informations de commande ; et
dans lequel les informations signalées dans le premier message d'informations de commande comprennent une indication d'un niveau d'agrégation du deuxième message d'informations de commande.

4. Procédé selon la revendication 3, dans lequel un paramètre du premier message d'informations de commande indique des ressources pour un fonctionnement avec le sTTI, ou dans lequel les ressources sont des ressources d'éléments de canal de commande, CCE, le procédé comprenant en outre :
la réception (S204) d'informations indiquant quelles ressources de CCE doivent être sautées lors d'une tentative de décodage du deuxième message d'informations de commande.

5. Procédé selon l'une quelconque des revendications précédentes, dans lequel les ressources sont des ressources d'éléments de canal de commande, CCE ; et/ou
un ensemble de ressources de temps-fréquence ; et/ou
dans lequel le dispositif sans fil décode le deuxième message d'informations de commande à l'aide de moins que toutes les ressources d'éléments de canal de commande, CCE, candidates disponibles.

6. Procédé selon l'une quelconque des revendications précédentes, dans lequel le paramètre du premier message d'informations de commande ou les informations signalées sont un nombre de candidats de canal de commande pour au moins un niveau d'agrégation, AL ; et/ou
dans lequel chacune des ressources de CCE candidates disponibles est définie par une combinaison unique d'un niveau d'agrégation, AL, de CCE et d'une position de début de CCE à l'intérieur de la bande de fréquences de TTI.

7. Procédé selon l'une quelconque des revendications précédentes, dans lequel le dispositif sans fil (300a, 300b) décode le deuxième message d'informations de commande à l'aide uniquement d'un niveau d'agrégation, AL, d'éléments de canal de commande, CCE, supérieur ou égal à l'AL du premier message d'informations de commande ; et/ou dans lequel le dispositif sans fil (300a, 300b) décode le deuxième message d'informations de commande à l'aide uniquement d'un niveau d'agrégation, AL, d'éléments de canal de commande, CCE, égal à l'AL du premier message d'informations de commande.

8. Procédé selon l'une quelconque des revendications précédentes, dans lequel le deuxième message d'informations de commande est un octroi rapide ou dans lequel le deuxième message d'informations de commande est spécifique au dispositif sans fil (300a, 300b).

9. Procédé selon l'une quelconque des revendications précédentes, dans lequel le premier message d'informations de commande comprend un octroi de liaison montante et le deuxième message d'informations de commande comprend un octroi (ou une attribution) de liaison descendante, ou le premier message d'informations de commande comprend un octroi (ou une attribution) de liaison descendante et le deuxième message d'informations de commande comprend un octroi de liaison montante, et/ou dans lequel le premier message d'informations de commande comprend une bande de fréquences pour un fonctionnement avec le sTTI, et/ou le deuxième message d'informations de commande comprend des informations de commande qui sont spécifiques au dispositif sans fil (300a, 300b).

10. Procédé selon l'une quelconque des revendications précédentes, dans lequel le premier message d'informations de commande est valide pour une ou plusieurs sous-trames, et le deuxième message d'informations de commande est valide pour une ou plusieurs sous-trames, ou le premier message d'informations de commande est valide pour une ou plusieurs sous-trames et/ou ledit deuxième message d'informations de commande est dans chaque sTTI ; et/ou dans lequel le premier message d'informations de commande est un message de configuration de couche supérieure, comme un message de commande de ressources radio, RRC.

11. Procédé selon l'une quelconque des revendications précédentes, dans lequel le deuxième message d'informations de commande comprend au plus un octroi de liaison descendante ; et/ou dans lequel le deuxième message d'informations de commande comprend au plus un octroi de liaison montante et un octroi de liaison descendante.

12. Noeud de réseau (200) pour l'octroi de ressources sur un canal à un dispositif sans fil (300a) fonctionnant avec un intervalle de temps de transmission court, sTTI, le noeud de réseau (200) comprenant une circuiterie de traitement (210), la circuiterie de traitement étant configurée pour amener le noeud de réseau (200) à :
transmettre, au dispositif sans fil (300a), un premier message d'informations de commande pour le canal ; et
transmettre, au dispositif sans fil (300a), un deuxième message d'informations de commande pour le canal, dans lequel le deuxième message d'informations de commande peut être décodé sur la base d'informations signalées dans le premier message d'informations de commande ;
dans lequel le deuxième message d'informations de commande présente un niveau d'agrégation, AL, d'éléments de canal de commande, CCE ;
dans lequel les informations signalées dans le premier message d'informations de commande comprennent une indication d'un ensemble de ressources de fréquence pour le deuxième message d'informations de commande ; et
dans lequel les informations signalées dans le premier message d'informations de commande comprennent une indication d'un niveau d'agrégation du deuxième message d'informations de commande.

13. Dispositif sans fil (300a, 300b) pour la réception d'octroi de ressources sur un canal de données, le dispositif sans fil (300a, 300b) étant configuré pour fonctionner avec un intervalle de temps de transmission court, sTTI, et comprenant une circuiterie de traitement (310), la circuiterie de traitement étant configurée pour amener le dispositif sans fil (300a, 300b) à :
recevoir un premier message d'informations de commande pour le canal de données ; et
décoder un deuxième message d'informations de commande pour le canal de données sur la base d'informations signalées dans le premier message d'informations de commande ;
dans lequel le deuxième message d'informations de commande présente un niveau d'agrégation, AL, d'éléments de canal de commande, CCE ;
dans lequel les informations signalées dans le premier message d'informations de commande comprennent une indication d'un ensemble de ressources de fréquence pour le deuxième message d'informations de commande ; et
dans lequel les informations signalées dans le premier message d'informations de commande comprennent une indication d'un niveau d'agrégation du deuxième message d'informations de commande.

14. Dispositif sans fil (300a, 300b) selon la revendication 13, dans lequel un paramètre du premier message d'informations de commande indique des ressources pour un fonctionnement avec le sTTI.

15. Dispositif sans fil (300a, 300b) selon la revendication 13 ou 14, étant en outre configuré pour réaliser un procédé selon l'une quelconque des revendications 4 à 11.
